# EUROPÄISCHE PATENTSCHRIFT

(11) **EP 1 452 786 B1**
(45) Veröffentlichungstag und Bekanntmachung des Hinweises auf die Patenterteilung: **14.03.2007**
(21) Anmeldenummer: 04004006.5
(22) Anmeldetag: 23.02.2004
(51) Int. Cl.: F16K 31/06, F15B 13/00

(54) **Proportionalmagnetventil**
Proportional magnetic valve
Soupape magnétique proportionnelle

(30) Priorität: 26.02.2003 DE 10308074
(43) Veröffentlichungstag der Anmeldung: 01.09.2004
(73) Patentinhaber: HYDRAULIK-RING GMBH, 97828 Marktheidenfeld (DE)
(72) Erfinder: Knecht, Andreas, 72127 Kusterdingen (DE); Polzin, Ulf, 70771 Leinfelden (DE)
(74) Vertreter: Jackisch-Kohl, Anna-Katharina

(56) Entgegenhaltungen:
- EP-A- 0 978 440
- DE-A- 3 307 554
- DE-A- 19 717 445
- US-A- 5 191 827
- US-A1- 2001 009 164
- US-B1- 6 289 921

## Beschreibung

Die Erfindung betrifft ein Ventil, vorzugsweise ein Proportionalmagnetventil, nach dem Oberbegriff des Anspruches 1 bzw. 6.

Solche Ventile werden als Cartridge-Ventile eingesetzt, die mit ihrem Ventilteil in einen Aufnahmeblock, beispielsweise einen Motorblock einer Brennkraftmaschine, eingesetzt werden. Im Motorblock befinden sich Ölkanäle, über die Öl zu Anschlußbohrungen im Ventilteil zugeführt wird. Die Ölkanäle im Aufnahmeblock müssen winkelgenau gebohrt werden, damit sie in die zugehörigen Anschlußbohrungen bzw. Ringnuten des Ventilteiles münden. Außerdem wird die Anforderung an die mögliche Einbauposition des Ventils im Aufnahmeblock dadurch erheblich eingeschränkt. Darum sind sehr hohe Anforderungen an die Herstellung der Ölkanäle notwendig. Außerdem wird die Anforderung an die Einbaulage des Ventils erheblich erhöht.

Beim gattungsgemäßen Ventil (DE 33 07 554 A) sind im Kolben des Ventils sowie im Ventilteilgehäuse jeweils Ringnuten vorgesehen, so daß hinsichtlich des Einsatzes dieser Ventile das gleiche gilt wie bei den beschriebenen Cartridge-Ventilen.

Auch bei anderen bekannten Ventilen (US 20011009164 A1, US-B1-6 289 921, EP-A-0 978 440, US-A-5 191 827, DE 197 17 445 A) sind die Kolben bzw. Ventilteilgehäuse jeweils mit Ringnuten versehen.

Die Erfindung liegt die Aufgabe zugrunde, das gattungsgemäße Ventil so auszubilden, daß in konstruktiv einfacher Weise eine einwandfreie Zuführung bzw. Abführung des Druckmediums vom Ventilteil zu den Ölkanälen des Aufnahmeblockes gewährleistet ist.

Diese Aufgabe wird beim gattungsgemäßen Ventil erfindungsgemäß mit den kennzeichnenden Merkmalen des Anspruches 1 bzw. 6 gelöst.

Beim erfindungsgemäßen Ventil gemäß Anspruch 1 befindet sich die Anschlußbohrung in der Nut, die sich längs des Ventiles erstreckt. Über den Umfang des Ventilteilgehäuses liegen die in Längsrichtung verlaufenden Nuten mit Abstand nebeneinander. Die Ölkanäle im Aufnahmeblock müssen nur so vorgesehen werden, daß sie in die Nuten münden. Es ist darum nicht mehr erforderlich, die Ölkanäle so herzustellen, daß sie genau in die Anschlußbohrung gelangen. Dadurch können bei der Lagegenauigkeit der Ölkanäle größere Toleranzen zugelassen werden. Das Öl gelangt aus dem jeweiligen Ölkanal zunächst in die Nut, in der das Öl dann zuverlässig zurn Anschlußbohrung strömt. Infolge der erfindungsgemäßen Ausbildung wird die Montage des Ventiles am Aufnahmeblock erleichtert.

Die Nut kann sich vorteilhaft in Axialrichtung des Ventiles erstrecken. Es ist aber auch möglich, daß die Nut in Umfangsrichtung des Ventilteiles schräg verläuft, das heißt eine Steigung aufweist.

Zweckmäßig ist für jede Anschlußbohrung eine Nut vorgesehen.

Vorteilhaft entspricht der Durchmesser der Anschlußbohrung der Breite der Nut. Dadurch bilden sich im Bereich des Randes der Anschlußbohrung keine Toträume, in denen sich beispielsweise Schmutz, der im Öl vorhanden ist, ablagern kann.

Vorteilhaft ist das Ventil ein Cartridgeventil, wie es bevorzugt in der Automobilindustrie eingesetzt wird.

Beim erfindungsgemäßen Ventil gemäß Anspruch 6 sitzt auf dem Ventilkörper die Hülse, die in diesem Fall eine Verteilerhülsebildet, die auch auf schon bestehende Ventile geschoben werden kann. Darum können solche Ventile nachträglich umgerüstet werden. Die Hülse weist in ihrer Längsrichtung verlaufende und in Umfangsrichtung mit Abstand nebeneinander liegende Nuten auf, in deren Boden Bohrungen vorgesehen sind, die mit den Nuten des Ventilkörpers in Verbindung stehen.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: ein erfindungsgemäßes Ventil in eingebautem Zustand,
- Fig. 2: das erfindungsgemäße Ventil in Seitenansicht auf Arbeitsanschlüsse A, B und T,
- Fig. 3: das erfindungsgemäße Ventil in Seitenansicht auf einen Druckanschluß P,
- Fig. 4 und Fig. 5: jeweils in perspektivischer Darstellung das erfindungsgemäße Ventil,
- Fig. 6: eine zweite Ausführungsform eines erfindungsgemäßen Ventiles in Seitenansicht,
- Fig. 7: das Ventil gemäß Fig. 6 teilweise im Axialschnitt,
- Fig. 8: in perspektivischer Darstellung das Ventil gemäß Fig. 6 mit einer Buchse.

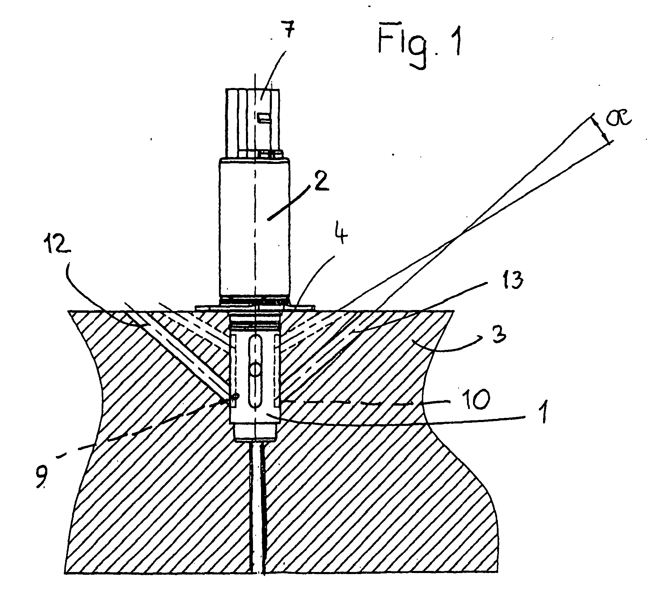

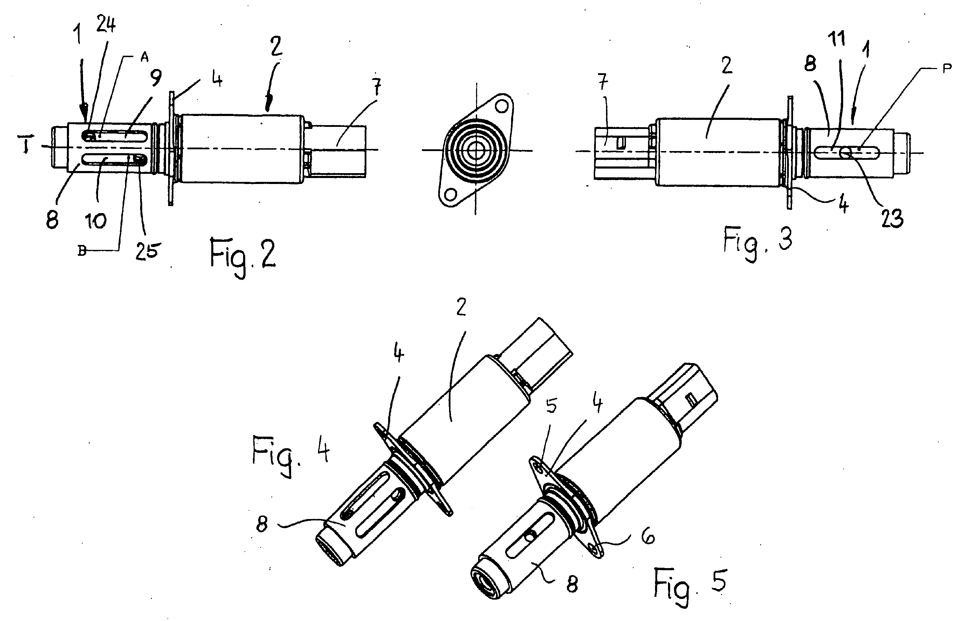

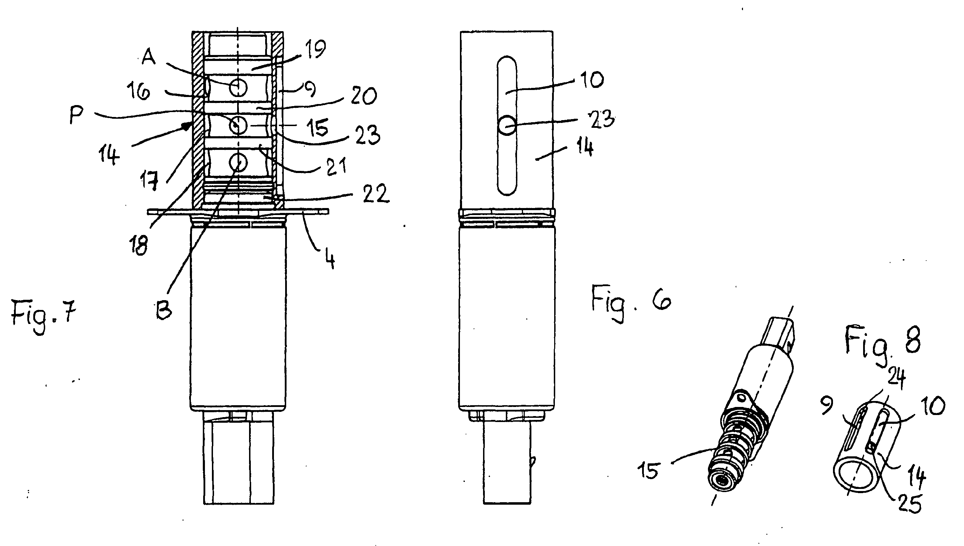

Im dargestellten Ausführungsbeispiel ist das Ventil ein Proportionalmagnetventil mit einem Ventilteil 1 und einem Elektromagnetteil 2. Der Ventilteil 1 hat in bekannter Weise einen (nicht dargestellten) Kolben, der durch einen (nicht dargestellten) Stößel des Elektromagnetteiles 2 gegen eine Gegenkraft verschoben werden kann, um wahlweise Arbeitsanschlüsse A und B mit einem Druckanschluß P in Verbindung zu bringen. Das Ventil wird mit seinem Ventilteil 1 in einen Aufnahmeblock 3 eingesetzt (Fig. 1), der ein Motorblock einer Brennkraftmaschine sein kann. Am Übergang zwischen dem Ventilteil 1 und dem Elektromagnetteil 2 ist das Ventil mit einem Befestigungsflansch 4 versehen, der radial über den Ventilteil 1 und/oder den Elektromagnetteil 2 ragt und der in der Einbaulage auf dem Aufnahmeblock 3 aufliegt. Der Befestigungsflansch 4 hat Öffnungen 5, 6 (Fig. 5) für Schrauben, mit denen das Ventil auf dem Aufnahmeblock 3 befestigt wird. An dem vom Ventilteil 1 abgewandten Ende des Elektromagnetteiles 2 ist ein elektrischer Anschluß 7 vorgesehen.

Der Ventilteil 1 hat ein Ventilgehäuse 8, das mit im Ausführungsbeispiel axial verlaufenden Ölführungsnuten 9 bis 11 versehen ist. Im Boden der Ölführungsnuten 9 bis 11 ist jeweils eine Bohrung 23 bis 25 vorgesehen. Über diese Nuten 9 bis 11 und Bohrungen 23 bis 25 wird das Hydrauliköl Anschlußbohrungen A, B und P zugeführt. Die Anschlußbohrungen A und B bilden die Arbeitsanschlüsse, die Anschlußbohrung P den Druckanschluß und die Anschlußbohrung T den Tankanschluß.

Der Aufnahmeblock 3 ist mit Ölkanälen versehen, von denen in Fig. 1 die Ölkanäle 12 und 13 erkennbar sind. Bei eingebautem Ventil müssen diese Ölkanäle bei bekannten Ventilen exakt zu den Anschlußbohrungen bzw. Ringnuten im Ventilteil 1 ausgerichtet sein. Dies bedingt eine sehr genaue Fertigung sowohl der Ölkanäle im Aufnahmeblock 3 als auch der Anordnung der Anschlußbohrungen im Ventilteil 3. Beim beschriebenen Ventil ist diese genaue Lagezuordnung nicht mehr notwendig. Beim Einbau des Ventiles muß nur noch darauf geachtet werden, daß die Ölkanäle 12, 13 des Aufnahmeblockes 3 in die entsprechenden Ölführungsnuten 9 bis 11 des Ventilteiles 1 münden. Innerhalb der Ölführungsnuten gelangt das Öl auf jeden Fall in die zugehörigen Anschlußbohrungen. Umgekehrt gelangt das Öl zuverlässig aus dem Ventilteil 1 in die jeweiligen Ölkanäle 12, 13.

Aufgrund der axial verlaufenden Ölführungsnuten 9 bis 11 können die Ölkanäle 12, 13 im Aufnahmeblock 3 unterschiedlich geneigt verlaufen, ohne daß dadurch die zuverlässige Zuführung des Öls beeinträchtigt wird. Mit ausgezogenen Linien sind die Ölkanäle 12, 13 in der einen extremen Schräglage gezeichnet, in der sie in das untere Ende der Ölführungsnuten 9, 10 münden. Mit gestrichelten Linien ist die andere extreme Schräglage dieser Ölkanäle eingezeichnet, in der sie in das obere Ende dieser Ölführungsnuten 9, 10 münden. Somit können die Ölkanäle 12, 13 im Aufnahmeblock 3 um den Winkel α unterschiedlich geneigt vorgesehen werden, ohne daß dadurch die Zuführung bzw. Ableitung des Öls beeinträchtigt wird.

Aufgrund der Ölführungsnuten 9 bis 11 ist eine hohe Lagegenauigkeit der in den Aufnahmeblock 3 zu bohrenden Ölkanäle 12, 13 nicht erforderlich. Die Neigung der Ölkanäle 12, 13 kann um den Winkel α variieren. Aufgrund der Ölführungsnuten 9 bis 11 wird die Variabilität der Einbauposition des Ventils im Aufnahmeblock 3 erheblich erhöht. Außerdem wird durch die Ölführungsnuten 9 bis 11 die Toleranz der Winkellage der Ölkanäle 12, 13 aufgeweitet.

Im dargestellten Ausführungsbeispiel verlaufen die verschiedenen Ölführungsnuten 9 bis 11 jeweils axial. Es ist ohne weiteres möglich, die Ölführungsnuten 9 bis 11 auch unter einem Winkel geneigt am Ventilgehäuse 8 vorzusehen. Auch in diesem Falle ist keine hohe Lagegenauigkeit der Ölkanäle 12, 13 im Aufnahmeblock 3 erforderlich.

Die Fig. 6 bis 8 zeigen eine Ausführungsform eines Ventils, bei dem die Ölführungsnuten 9 bis 11 in einer Buchse 14 vorgesehen sind, die auf einen Ventilkörper 15 geschoben wird. Der Ventilkörper 15 hat Ringnuten 16 bis 18, die durch Ringstege 19 bis 22 begrenzt sind. In die Ringnuten 16 bis 18 münden die verschiedenen Anschlüsse A, B und P des Ventils. Die Ringstege 19 bis 22 liegen an der Innenwand der Buchse 14 an, so daß das Öl nicht über die Ringstege in die benachbarten Ringnuten 16 bis 18 gelangen kann.

Im Boden der Ölführungsnuten 9 bis 11 befindet sich jeweils eine Bohrung 23 bis 25, über die das Öl in die jeweilige Ringnut 16 bis 18 gelangen kann. Die Bohrungen 23 bis 25 benachbarter Ölführungsnuten 9 bis 11 sind axial gegeneinander versetzt.

Die Buchse 14 wird so weit auf den Ventilkörper 15 geschoben, bis sie mit ihrer einen Stirnseite am Befestigungsflansch 4 anliegt. Die Buchse 14 bildet eine Verteilerhülse, mit der nachträglich Ventile ausgerüstet werden können, um auch bei ihnen den Vorteil der Variabilität der Einbauposition des Ventiles im Aufnahmeblock 3 zu erzielen. Die Ölführungsnuten 9 bis 11 in der Buchse 14 können abweichend vom dargestellten Ausführungsbeispiel unter einem Winkel geneigt verlaufen.

Im übrigen ist das Ventil gemäß den Fig. 6 bis 8 gleich ausgebildet wie das vorige Ausführungsbeispiel.

## Patentansprüche

1. Ventil, vorzugsweise Proportionalmagnetventil, mit einem Elektromagnetteil (2), mit dem ein Kolben eines Ventilteiles(1) betätigbar ist, der ein Gehäuse (8) aufweist, das Anschlußbohrungen (A, B, P, T; 23 bis 25) für ein Druckmedium aufweist, die in Nuten (9 bis 11) des Ventilteilgehäuses (8) liegen,
**dadurch gekennzeichnet, daß** die Nuten (9 bis 11) in Längsrichtung des Ventilteilgehäuses (8) verlaufen und in Umfangsrichtung des Ventilteilgehäuses (8) mit Abstand nebeneinander liegen.

2. Ventil nach Anspruch 1,
**dadurch gekennzeichnet, daß** sich die Nuten (9 bis 11) in Axialrichtung des Ventilteilgehäuses (8) erstrecken.

3. Ventil nach Anspruch 1 oder 2,
**dadurch gekennzeichnet, daß** für jede Anschlußbohrung (A, B, P, T; 23 bis 25) eine Nut (9 bis 11) vorgesehen ist.

4. Ventil nach einem der Ansprüche 1 bis 3,
**dadurch gekennzeichnet, daß** der Durchmesser der Anschlußbohrung (A, B, P, T; 23 bis 25) der Breite der Nut (9 bis 11) entspricht.

5. Ventil nach einem der Ansprüche 1 bis 4,
**dadurch gekennzeichnet, daß** das Ventil ein Cartridge-Ventil ist.

6. Ventil, vorzugsweise Proportionalmagnetventil, mit einem Elektromagnetteil (2), mit dem ein Kolben eines Ventilteiles (1) betätigbar ist, der einen Ventilkörper (15) aufweist, der Anschlußbohrungen (A, B, P) aufweist, die in Nuten (16 bis 18) des Ventilkörpers (15) liegen,
**dadurch gekennzeichnet, daß** auf dem Ventilkörper (15) eine Hülse (14) sitzt, die in ihrer Längsrichtung verlaufende, in Umfangsrichtung mit Abstand nebeneinander liegende Nuten (9 bis 11) aufweist, in deren Boden Bohrungen (23 bis 25) vorgesehen sind, die mit den Nuten (16 bis 18) des Ventilkörpers (15) in Verbindung stehen.

## Claims

1. Valve, preferably a proportional solenoid valve, comprising an electromagnetic part (2), which is the means of actuating a piston of a valve part (1), which comprises a housing (8) that has connection bores (A, B, P, T; 23 to 25) for a pressure medium, which lie in grooves (9 to 11) of the valve part housing (8),
**characterized in that** the grooves (9 to 11) extend in longitudinal direction of the valve part housing (8) and lie with clearance alongside one another in peripheral direction of the valve part housing (8).

2. Valve according to claim 1,
**characterized in that** the grooves (9 to 11) extend in axial direction of the valve part housing (8).

3. Valve according to claim 1 or 2,
**characterized in that** one groove (9 to 11) is provided for each connection bora (A, D, P, T; 23 to 25).

4. Valve according to one of claims 1 to 3,
**characterized in that** the diameter of the connection bore (A, B, P, T; 23 to 25) corresponds to the width of the groove (9 to 11).

5. Valve according to one of claims 1 to 4,
**characterized in that** the valve is a cartridge valve.

6. Valve, preferably a proportional solenoid valve, comprising an electromagnetic part (2), which is the means of actuating a piston of a valve part (1), which comprises a valve body (15) that has connection bores (A, B, P), which lie in grooves (16 to 18) of the valve body (15),
**characterized in that** seated on the valve body (15) is a sleeve (14) having grooves (9 to 11), which extend in longitudinal direction of the sleeve and lie with clearance alongside one another in peripheral direction and in the base of which bores (23 to 25) are provided, which communicate with the grooves (16 to 18) of the valve body (15).

## Revendications

1. Soupape, de préférence soupape magnétique proportionnelle, avec un élément électromagnétique (2) pouvant actionner un piston d'une pièce de soupape (1) contenu dans un carter (8) qui présente des perçages de raccordement (A, B, P, T; 23 à 25) pour un agent de pressurisation, lesdits perçages se trouvant dans les rainures (9 à 11) du carter d'une pièce de soupape (8),
**caractérisée en ce que** les rainures (9 à 11) s'étendent dans le sens de la longueur du carter d'une pièce de soupape (8) et se trouvent à une certaine distance les unes des autres dans le sens de la périphérie du carter d'une pièce de soupape (8).

2. Soupape selon la revendication 1,
**caractérisée en ce que** les rainures (9 à 11) s'étendent dans le sens axial du carter d'une pièce de soupape (8).

3. Soupape selon la revendication 1 ou 2,
**caractérisée en ce que** pour chaque perçage de raccordement (A, B, P, T; 23 à 25), une rainure (9 à 11) a été prévue.

4. Soupape selon l'une quelconque des revendications 1 à 3,
**caractérisée en ce que** le diamètre du perçage de raccordement (A, D, P, T; 23 à 25) correspond à la largeur de la rainure (9 à 11).

5. Soupape selon l'une quelconque des revendications 1 à 4,
**caractérisée en ce que** la soupape est une soupape à cartouche.

6. Soupape, de préférence soupape magnétique proportionnelle, avec un élément électromagnétique (2) pouvant actionner un piston d'une pièce de soupape (1) contenu dans un corps de soupape (15) qui présente dos perçages de raccordement (A, B, P) se trouvant dans les rainures (16 à 18) du corps de soupape (15),
**caractérisée en ce qu'**une douille (14) repose sur le corps de soupape (15), ladite douille présentant des rainures (9 à 11) s'étendant dans le sens de la longueur et se trouvant à une certaine distance les unes des autres dans le sens de la périphérie, des perçages (23 à 25) étant prévus dans leur fond et étant reliés aux rainures (16 à 18) du corps de soupape (15).
